# EUROPEAN PATENT APPLICATION

(11) **EP 4 550 730 A1**
(43) Date of publication of application: **07.05.2025**
(21) Application number: 23831447.0
(22) Date of filing: 27.06.2023
(51) Int. Cl.: H04L 25/02

(54) **CABLE**

(30) Priority: 29.06.2022 JP 2022104712
(71) Applicant: Nuvoton Technology Corporation Japan, Nagaokakyo City, Kyoto 617-8520 (JP)
(72) Inventor: SHIMMYO, Akinori, Nagaokakyo City, Kyoto 617-8520 (JP); TANAKA, Kenji, Nagaokakyo City, Kyoto 617-8520 (JP); HATOOKA, Kazuya, Nagaokakyo City, Kyoto 617-8520 (JP)
(74) Representative: Novagraaf International SA
(86) International application number: PCT/JP2023/023778
(87) International publication number: WO 2024/005007

(57) **Abstract**

A cable (1) includes a first retimer (10a), a second retimer (10b), and a coaxial line (20). Each of the first retimer (10a) and the second retimer (10b) includes: a differential-to-single-ended signal converter (11) that receives an input of a differential signal and outputs a single-ended signal; and a single-ended-to-differential signal converter (12) that receives an input of a single-ended signal and outputs a differential signal. The first retimer (10a) and the second retimer (10b) are connected via the coaxial line (20).

## Description

### [Technical Field]

The present disclosure relates to a cable.

### [Background Art]

Patent Literature (PTL) 1 discloses a technique for reducing the number of electric wires by using a ground shield of a coaxial line or a shielded twisted pair (STP) line as a signal line for low-speed communication.

### [Citation List]

### [Patent Literature]

[PTL 1] U.S. Patent No. 9076575, the Specification

### [Summary of Invention]

### [Technical Problem]

In the technique disclosed by PTL 1, the number of electric wires is reduced down to two besides the ground shield, but a further reduction in the number of electric wires is desired.

In view of the above, the present disclosure provides a cable with a reduced number of electric wires.

### [Solution to Problem]

A cable according to the present disclosure includes: a first converter; a second converter; and a coaxial line. Each of the first converter and the second converter includes: a differential-to-single-ended signal converter that receives an input of a differential signal and outputs a single-ended signal; and a single-ended-to-differential signal converter that receives an input of a single-ended signal, and outputs a differential signal. The first converter and the second converter are connected via the coaxial line.

Note that these comprehensive or concrete aspects may be implemented by a system, method, integrated circuit, computer program, or recording medium such as a computer-readable CD-ROM, and may also be implemented by optionally combining systems, methods, integrated circuits, computer programs, and recording media.

### [Advantageous Effects of Invention]

A cable according to one aspect of the present disclosure can reduce the number of electric wires.

### [Brief Description of Drawings]

[FIG. 1]

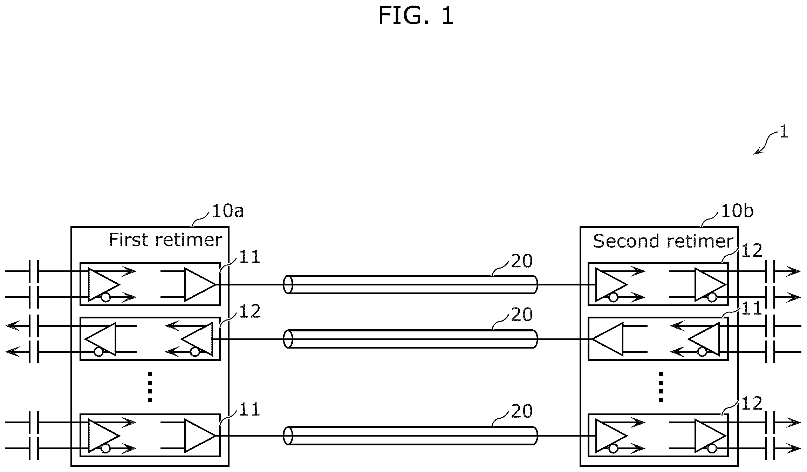

   FIG. 1 is a diagram illustrating one example of a configuration of a cable according to an embodiment.
[FIG. 2]

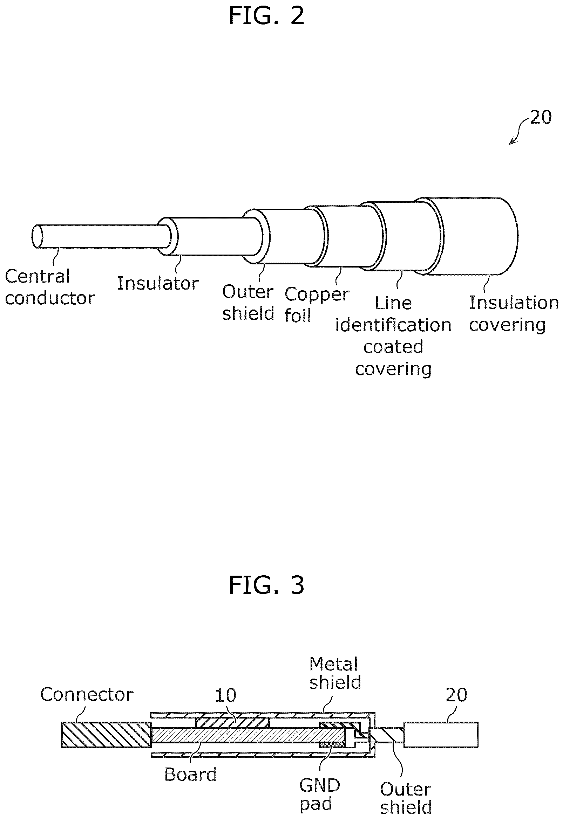

   FIG. 2 is a diagram illustrating one example of a layer structure of layers of a coaxial line according to the embodiment.
[FIG. 3]
   FIG. 3 is a diagram illustrating one example of a cross-sectional configuration of a retimer and nearby elements according to the embodiment.
[FIG. 4A]

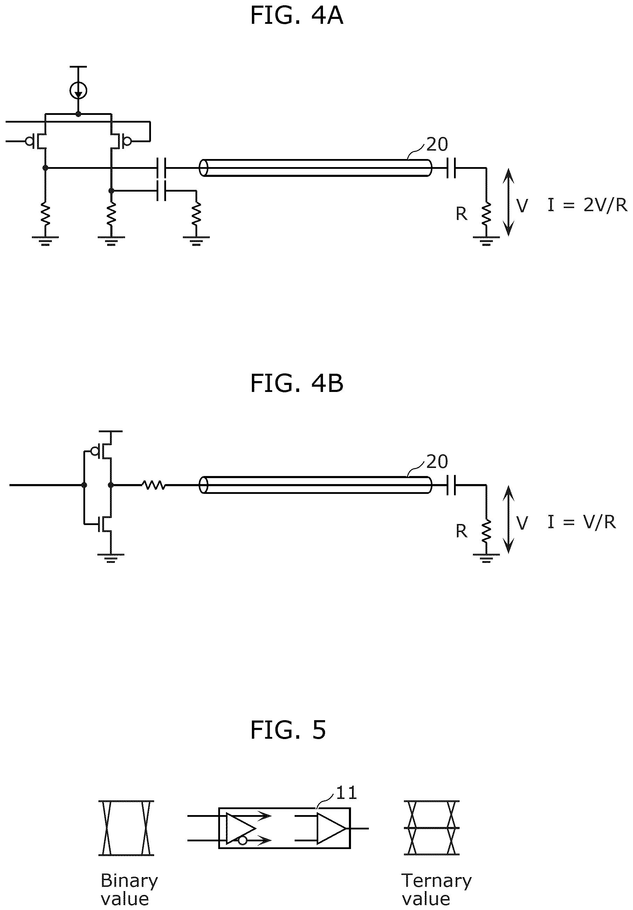

   FIG. 4A is a diagram illustrating electric power consumption when a coaxial line side is AC coupled.
[FIG. 4B]
   FIG. 4B is a diagram illustrating electric power consumption when the coaxial line side is DC coupled.
[FIG. 5]
   FIG. 5 is a diagram schematically illustrating a difference between an encoding method of an input side and an encoding method of an output side.
[FIG. 6]

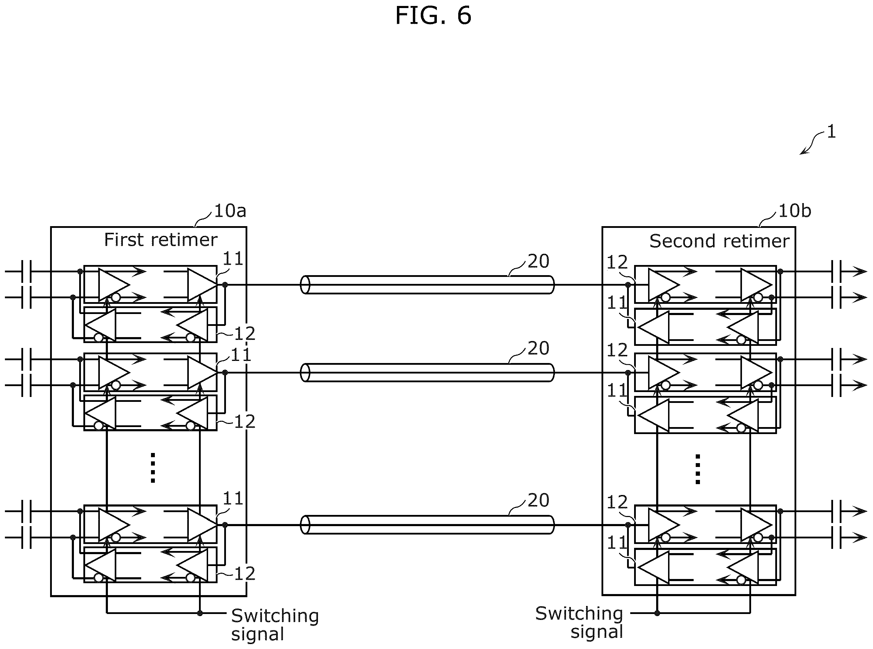

   FIG. 6 is a diagram illustrating a different example of the configuration of the cable according to the embodiment.
[FIG. 7A]

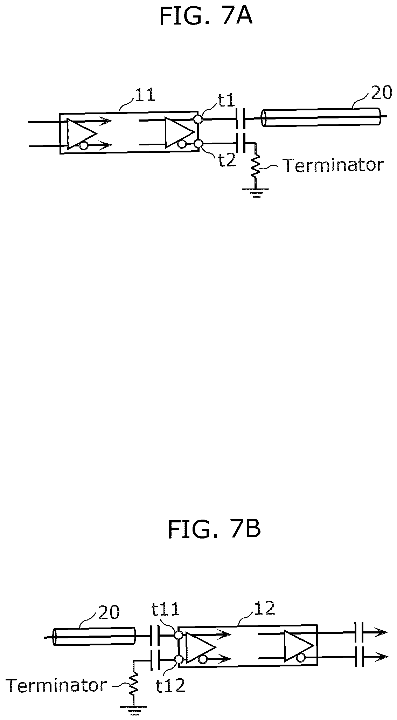

   FIG. 7A is a diagram illustrating one example of a configuration of a differential-to-single-ended signal converter according to the embodiment.
[FIG. 7B]
   FIG. 7B is a diagram illustrating one example of a configuration of a single-ended-to-differential signal converter according to the embodiment.
[FIG. 8A]

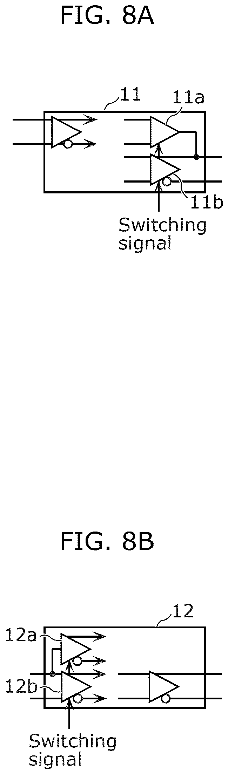

   FIG. 8A is a diagram illustrating a different example of the configuration of the differential-to-single-ended signal converter according to the embodiment.
[FIG. 8B]
   FIG. 8B is a diagram illustrating a different example of the configuration of the single-ended-to-differential signal converter according to the embodiment.
[FIG. 9A]

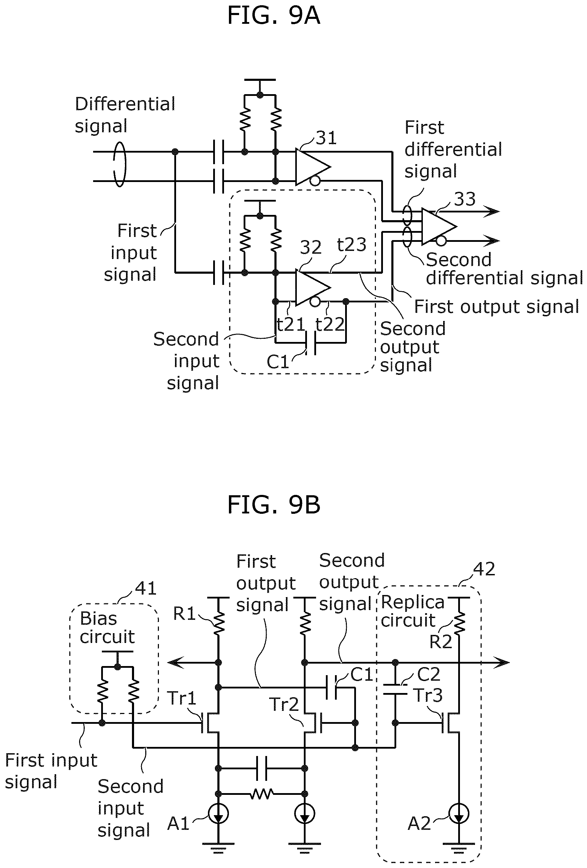

   FIG. 9A is a circuit diagram illustrating one example of the differential-to-single-ended signal converter and the single-ended-to-differential signal converter according to the embodiment.
[FIG. 9B]
   FIG. 9B is a circuit diagram illustrating a circuit nearby a single-ended-to-differential signal conversion device according to the embodiment.

### [Description of Embodiment]

A cable according to one aspect of the present disclosure includes: a first converter; a second converter; and a coaxial line. Each of the first converter and the second converter includes: a differential-to-single-ended signal converter that receives an input of a differential signal and outputs a single-ended signal; and a single-ended-to-differential signal converter that receives an input of a single-ended signal, and outputs a differential signal. The first converter and the second converter are connected via the coaxial line.

According to the above, a differential-to-single-ended signal converter included in one of the first converter or the second converter converts a differential signal into a single-ended signal and outputs the single-ended signal, and a single-ended-to-differential signal converter included in the other of the first converter or the second converter converts the inputted single-ended signal into the differential signal and outputs the differential signal. Accordingly, at least a single-ended signal needs to be transmitted through a coaxial line that connects one differential-to-single-ended signal converter and one single-ended-to-differential signal converter. Since connection of one differential-to-single-ended signal converter and one single single-ended-to-differential signal converter requires one electric wire, the number of electric wires can be reduced.

For example, in each of the first converter and the second converter, whether the differential-to-single-ended signal converter or the single-ended-to-differential signal converter is used may be switchable.

According to the above, the cable can be accommodated to a cable whose signal direction is one direction, such as a high definition multimedia interface (HDMI) (registered trademark) cable and a display port cable.

For example, in each of the first converter and the second converter, a side closer to the coaxial line may be DC coupled and a side opposite the side closer to the coaxial line may be AC coupled.

According to the above, when a side closer to the coaxial line - i.e. the coaxial line side - is DC coupled, current consumption can be reduced compared to the case where the coaxial line side is AC coupled, and thus the electric power consumption can be cut down.

For example, each of the first converter and the second converter may be covered by a metal shield.

According to the above, the metal shield can inhibit electromagnetic interference (EMI) that arises from the cable.

For example, an outer shield that covers the coaxial line may be connected to the metal shield and a ground of a board on which the first converter or the second converter is mounted.

According to the above, EMI arising from the cable can be further reduced.

For example, the differential-to-single-ended signal converter may include two output terminals that are capable of outputting the differential signal, and may output the single-ended signal by one of the two output terminals being connected to a terminator.

According to the above, connection of one output terminal out of the two output terminals that are capable of outputting a differential signal to a terminator can implement a differential-to-single-ended signal converter that outputs a single-ended signal. For example, it is not necessary to prepare a dedicated element that outputs a single-ended signal. Instead, a component that receives an input of a differential signal and outputs the differential signal can be utilized as a differential-to-single-ended signal converter.

For example, the single-ended-to-differential signal converter may include two input terminals that are capable of receiving inputs of the differential signal, and may receive an input of the single-ended signal by one of the two input terminals being connected to a terminator.

According to the above, a connection of one input terminal out of two input terminals that are capable of receiving an input of a differential signal to a terminator implements a single-ended-to-differential signal converter that receives an input of a single-ended signal. For example, it is not necessary to prepare a dedicated element that receives an input of a single-ended signal. Instead, a component that receives an input of a differential signal and outputs a differential signal can be utilized as a single-ended-to-differential signal converter.

For example, the terminator may be provided inside the first converter or the second converter.

According to the above, providing a terminator inside the first converter or the second converter in advance can reduce the number of components.

For example, the differential-to-single-ended signal converter may include a single-ended signal outputter that outputs the single-ended signal and a differential signal outputter that outputs the differential signal, and whether the single-ended signal outputter or the differential signal outputter is used may be switchable.

According to the above, the use of a single-ended signal outputter out of the single-ended signal outputter and the differential signal outputter can implement a differential-to-single-ended signal converter that outputs a single-ended signal. For example, it is not necessary to prepare a dedicated element that outputs a single-ended signal. Instead, a component that can switch between a single-ended signal and a differential signal to output either of the signals can be utilized as a differential-to-single-ended signal converter.

For example, the single-ended-to-differential signal converter may include a single-ended signal input receiver that receives an input of the single-ended signal and a differential signal input receiver that receives an input of the differential signal, and whether the single-ended signal input receiver or the differential signal input receiver is used may be switchable.

According to the above, the use of a single-ended signal input receiver out of the single-ended signal input receiver and the differential signal input receiver can implement a single-ended-to-differential signal converter that receives an input of a single-ended signal. For example, it is not necessary to prepare a dedicated element that receives an input of a single-ended signal. Instead, a component that can switch between a single-ended signal and a differential signal to output either of the signals can be utilized as a single-ended-to-differential signal converter.

For example, the differential-to-single-ended signal converter may output the single-ended signal having a larger amplitude than an amplitude of the differential signal input.

According to the above, an increase in the amplitude when a differential signal is converted into a single-ended signal ensures S/N.

For example, each of the differential-to-single-ended signal converter and the single-ended-to-differential signal converter may include: a differential amplifier that receives an input of the differential signal, and outputs a first differential signal; a single-ended-to-differential signal conversion device that receives an input of one signal of the differential signal, and outputs a second differential signal; and a switcher that receives inputs of the first differential signal and the second differential signal, switches between the first differential signal and the second differential signal, and outputs one of the first differential signal or the second differential signal.

According to the above, both of the function of a differential-to-single-ended signal converter and the function of a single-ended-to-differential signal converter can be implemented by the differential amplifier, the single-to-differential conversion device, and the switcher. Moreover, switching of a signal to be output by the switcher between a first differential signal and a second differential signal allows switching between the function of the differential-to-single-ended signal converter and the function of single-ended-to-differential signal converter.

For example, the single-ended-to-differential signal conversion device may receive inputs of a first input signal that is the one signal of the differential signal and a second input signal, and an output terminal of a first output signal for the first input signal and an input terminal of the second input signal may be coupled together at a capacitor.

According to the above, feeding a first output signal back to a second input signal via a capacitor can inhibit a reduction in the amplitude of the second input signal, and thus S/N can be ensured.

For example, the second input signal may include a bias signal of the differential signal which has an intermediate electric potential.

According to the above, since the first output signal is fed back to the second input signal via the capacitor, bias is required. However, since the second input signal includes a bias signal of a differential signal which has an intermediate electric potential, bias of the circuit can be ensured.

For example, an output terminal of a second output signal for the second input signal may be connected with a replica circuit that is a same circuit to which the first input signal is input.

According to the above, a load supplied to the output terminal of the first output signal and a load supplied to the output terminal of the second output signal can be kept in balance, and thus the waveform of an output signal can be improved.

For example, when the single-ended-to-differential signal converter included in one of the first converter or the second converter detects an error in the single-ended signal that has been input, the single-ended-to-differential signal converter may notify, to the differential-to-single-ended signal converter included in the other of the first converter or the second converter, to increase an amplitude of the single-ended signal to be output.

According to the above, when the single-ended-to-differential signal converter detects an error in an inputted single-ended signal, the differential-to-single-ended signal converter can increase the amplitude of a single-ended signal to be output. Accordingly, connectivity of the signal can be improved.

For example, in each of the differential-to-single-ended signal converter and the single-ended-to-differential signal converter, an encoding method of an input side and an encoding method of an output side may be different. Specifically, in the differential-to-single-ended signal converter, the encoding method of the input side may be a binary encoding method, and the encoding method of the output side may be a multi-valued encoding method with three or more values, and in the single-ended-to-differential signal converter, the encoding method of the input side may be the multi-valued encoding method with three or more values, and the encoding method of the output side may be the binary encoding method.

According to the above, multiple values can be expressed in a single-ended signal, and thus an amount of information to be conveyed by a signal transmitted in one electric wire is increased. Accordingly, the number of electric wires can be further reduced.

Hereinafter, embodiments will be described in detail with reference to the drawings.

Note that the embodiments below each describe a general or specific example. The numerical values, shapes, materials, elements, the arrangement and connection of the elements, steps, orders of the steps, etc., presented in the embodiments below are mere examples and are not intended to limit the present disclosure.

### [Embodiment]

Hereinafter, a cable according to an embodiment will be described.

FIG. 1 is a diagram illustrating one example of a configuration of cable 1 according to the embodiment.

Cable 1 includes first retimer 10a, second retimer 10b, and coaxial line 20. First retimer 10a is one example of a first converter, and second retimer 10b is one example of a second converter. When a signal is transmitted at a high speed, the waveform is disrupted due to decay in the amplitude of the signal and noise. However, since first retimer 10a and second retimer 10b compensate for jitter, transmission of a signal at a high speed is made possible while maintaining the waveform.

Each of first retimer 10a and second retimer 10b includes differential-to-single-ended signal converter 11 and single-ended-to-differential signal converter 12. For example, first retimer 10a includes a plurality of differential-to-single-ended signal converters 11 and a plurality of single-ended-to-differential signal converters 12, and second retimer 10b includes a plurality of differential-to-single-ended signal converters 11 and a plurality of single-ended-to-differential signal converters 12. Differential-to-single-ended signal converter 11 receives an input of a differential signal and outputs a single-ended signal. Single-ended-to-differential signal converter 12 receives an input of a single-ended signal and outputs a differential signal.

First retimer 10a and second retimer 10b are connected via coaxial line 20. In addition, for example, a connector is connected to each of first retimer 10a and second retimer 10b. These connectors are, for example, universal serial bus (USB) connectors and the like. Differential-to-single-ended signal converter 11 converts a differential signal input from the connector into a single-ended signal, and outputs the single-ended signal to coaxial line 20. Single-ended-to-differential signal converter 12 converts the single-ended signal input from coaxial line 20 into the differential signal, and outputs the differential signal to the connector.

As described above, differential-to-single-ended signal converter 11 included in one of first retimer 10a or second retimer 10b converts a differential signal into a single-ended signal and outputs the single-ended signal, and single-ended-to-differential signal converter 12 included in the other of first retimer 10a or second retimer 10b converts the inputted single-ended signal into the differential signal and outputs the differential signal. Accordingly, at least a single-ended signal needs to be transmitted through coaxial line 20 that connects one differential-to-single-ended signal converter 11 and one single-ended-to-differential signal converter 12. Since connection of one differential-to-single-ended signal converter 11 and one single-ended-to-differential signal converter 12 requires one electric wire, the number of electric wires can be reduced.

Hereinafter, it should be noted that first retimer 10a and second retimer 10b may be indicated as retimer 10 when first retimer 10a and second retimer 10 need not be distinguished. Moreover, the first converter and the second converter each are not limited to a retimer. The first converter and the second converter each may be a redriver or a repeater. In other words, each of first retimer 10a and second retimer 10b may be a redriver or a repeater.

Next, a configuration of coaxial line 20 will be described with reference to FIG. 2.

FIG. 2 is a diagram illustrating one example of a layer structure of layers of coaxial line 20 according to the embodiment.

As illustrated in FIG. 2, coaxial line 20 is provided with, for example, a central conductor at the center, and radially outward from the central conductor, an insulator, an outer shield, copper foil, a line identification coated covering, and an insulation covering. Note that the layer structure shown in FIG. 2 is one example. Accordingly, some of the elements need not be provided or more elements may be provided.

Next, a configuration nearby retimer 10 will be described with reference to FIG. 3.

FIG. 3 is a diagram illustrating one example of a cross-sectional configuration of retimer 10 and nearby elements according to the embodiment.

For example, retimer 10 is mounted on a board, such as a paddle card. A connector and coaxial line 20 are connected to the board. With this, retimer 10 can (i) convert a differential signal input from the connector into a single-ended signal and output the single-ended signal to coaxial line 20 or (ii) convert a single-ended signal input from coaxial line 20 into a differential signal and output the differential signal to the connector.

As illustrated in FIG. 3, each of first retimer 10a and second retimer 10b is covered by a metal shield, for example. These metal shields inhibit EMI that arises from cable 1. Moreover, for example, the outer shield that covers coaxial line 20 is connected to the metal shields and the ground (e.g., a ground pad) of the board on which retimer 10 (first retimer 10a or second retimer 10b) is mounted. With this, EMI that arises from cable 1 can be further inhibited.

For example, in each of first retimer 10a and second retimer 10b, a line closer to the coaxial line - i.e. the coaxial line 20 side - may be DC coupled and the side opposite the coaxial line 20 side (i.e., the connector side) may be AC coupled. When the coaxial line 20 side is DC coupled, current consumption can be reduced compared to the case where the coaxial line 20 side is AC coupled, and thus the electric power consumption can be cut down. The foregoing will be described with reference to FIG. 4A and FIG. 4B.

FIG. 4A is a diagram illustrating electric power consumption when the coaxial line 20 side is AC coupled.

FIG. 4B is a diagram illustrating electric power consumption when the coaxial line 20 side is DC coupled.

As illustrated in FIG. 4A, when the coaxial line 20 side is AC coupled, a current represented by I = 2 V/R is required when a signal whose amplitude is voltage value V is caused to flow through coaxial line 20 from a current driver. Alternatively, as illustrated in FIG. 4B, when the coaxial line 20 side is DC coupled, a current represented by I = V/R is required when the signal whose amplitude is voltage value V is caused to flow through coaxial line 20 from the current driver. For this reason, when the coaxial line 20 side is DC coupled, current consumption can be reduced compared to the case where the coaxial line 20 side is AC coupled, and thus the electric power consumption can be cut down.

For example, differential-to-single-ended signal converter 11 performs signal processing when differential-to-single-ended signal converter 11 converts a differential signal into a single-ended signal. Moreover, for example, single-ended-to-differential signal converter 12 performs signal processing when single-ended-to-differential signal converter 12 converts the single-ended signal into the differential signal.

For example, differential-to-single-ended signal converter 11 may perform signal processing such that differential-to-single-ended signal converter 11 can output a single-ended signal having a larger amplitude than the amplitude of an inputted differential signal. An increase in the amplitude when a differential signal is converted into a single-ended signal ensures S/N.

In addition, for example, differential-to-single-ended signal converter 11 and single-ended-to-differential signal converter 12 may perform encoding such that, in each of differential-to-single-ended signal converter 11 and single-ended-to-differential signal converter 12, the encoding method of the input side and the encoding method of the output side are different. For example, as for differential-to-single-ended signal converter 11, the encoding method of the input side (the connector side) is different from the encoding method of the output side (the coaxial line 20 side), and as for single-ended-to-differential signal converter 12, the encoding method of the input side (the coaxial line 20 side) is different from the encoding method of the output side (the connector side).

FIG. 5 is a diagram schematically illustrating a difference between an encoding method of the input side and an encoding method of the output side. FIG. 5 illustrates differential-to-single-ended signal converter 11.

As illustrated in FIG. 5, in differential-to-single-ended signal converter 11, the encoding method of the input side (the connector side) is a binary encoding method and the encoding method of the output side (the coaxial line 20 side) is a multi-valued encoding method with three or more values. Moreover, although not illustrated, in single-ended-to-differential signal converter 12, the encoding method of the input side (the coaxial line 20 side) is the multiple-valued encoding method with three or more values and the encoding method of the output side (the connector side) is the binary encoding method. With this, multiple values can be expressed in a single-ended signal, and thus an amount of information to be conveyed by a signal transmitted in one electric wire is increased. Accordingly, the number of electric wires can be further reduced.

In addition, for example, when single-ended-to-differential signal converter 12 included in one of first retimer 10a or second retimer 10b detects an error in an inputted single-ended signal, single-ended-to-differential signal converter 12 notifies, to differential-to-single-ended signal converter 11 included in the other of first retimer 10a or second retimer 10b, to increase the amplitude of a single-ended signal to be output. For example, when single-ended-to-differential signal converter 12 included in first retimer 10a detects an error in an inputted single-ended signal, single-ended-to-differential signal converter 12 notifies, to differential-to-single-ended signal converter 11 included in second retimer 10b, to increase the amplitude of the single-ended signal to be output. Moreover, for example, when single-ended-to-differential signal converter 12 included in second retimer 10b detects an error in an inputted single-ended signal, single-ended-to-differential signal converter 12 notifies, to differential-to-single-ended signal converter 11 included in first retimer 10a, to increase the amplitude of the single-ended signal to be output.

For example, single-ended-to-differential signal converter 12 stores, in advance, a pattern having a determined sequence as a pattern indicated by a pseudorandom binary sequence (PRBS), and detects an error when a signal having a pattern different from the stored pattern is input. As described above, when single-ended-to-differential signal converter 12 detects an error in an inputted single-ended signal, differential-to-single-ended signal converter 11 can increase the amplitude of the single-ended signal to be output. Accordingly, connectivity of the signal can be improved.

For example, in each of first retimer 10a and second retimer 10b, whether differential-to-single-ended signal converter 11 or single-ended-to-differential signal converter 12 is used may be switchable. The foregoing will be described with reference to FIG. 6.

FIG. 6 is a diagram illustrating a different example of the configuration of cable 1 according to the embodiment.

As illustrated in FIG. 6, differential-to-single-ended signal converter 11 and single-ended-to-differential signal converter 12 are connected in parallel in one path, and whether differential-to-single-ended signal converter 11 or single-ended-to-differential signal converter 12 is used is switchable. For example, first retimer 10a includes a plurality of sets of differential-to-single-ended signal converter 11 and single-ended-to-differential signal converter 12 connected in parallel, and second retimer 10b includes a plurality of sets of differential-to-single-ended signal converter 11 and single-ended-to-differential signal converter 12 connected in parallel. For example, rewriting of a register by a switching signal can switch between differential-to-single-ended signal converter 11 and single-ended-to-differential signal converter 12 so that either of these converters is used. Note that the above-described switching can be performed by an external pin or the like.

For example, when all sets of differential-to-single-ended signal converter 11 and single-ended-to-differential signal converter 12 in first retimer 10a are switched such that, among differential-to-single-ended signal converters 11 and single-ended-to-differential signal converters 12, only differential-to-single-ended signal converters 11 are to be used, all sets of differential-to-single-ended signal converter 11 and single-ended-to-differential signal converter 12 in second retimer 10b are switched such that, among differential-to-single-ended signal converters 11 and single-ended-to-differential signal converters 12, only single-ended-to-differential signal converters 12 are to be used. In this case, a signal is input to first retimer 10a, and the signal is output from second retimer 10b.

For example, when all sets of differential-to-single-ended signal converter 11 and single-ended-to-differential signal converter 12 in first retimer 10a are switched such that, among differential-to-single-ended signal converters 11 and single-ended-to-differential signal converters 12, only single-ended-to-differential signal converters 12 are to be used, all sets of differential-to-single-ended signal converter 11 and single-ended-to-differential signal converter 12 in second retimer 10b are switched such that, among differential-to-single-ended signal converters 11 and single-ended-to-differential signal converters 12, only differential-to-single-ended signal converters 11 are to be used. In this case, a signal is input to second retimer 10b, and the signal is output from first retimer 10a.

With this, the cable can be accommodated to a cable whose signal direction is one direction, such as an HDMI cable and a display port cable.

Next, methods of implementing differential-to-single-ended signal converter 11 and single-ended-to-differential signal converter 12 will be described with reference to FIG. 7A and FIG. 9B. For example, methods of implementing differential-to-single-ended signal converter 11 are described in FIG. 7A, FIG. 8A, and FIG. 9A, and methods of implementing single-ended-to-differential signal converter 12 are described in FIG. 7B, FIG 8B, and FIG. 9A.

FIG. 7A is a diagram illustrating one example of a configuration of differential-to-single-ended signal converter 11 according to the embodiment.

As illustrated in FIG. 7A, differential-to-single-ended signal converter 11 may include two output terminals t1 and t2 that are capable of outputting a differential signal, and may output a single-ended signal by one output terminal t2 out of the two output terminals t1 and t2 being connected to a terminator. As described above, connection of the one output terminal t2 out of the two output terminals t1 and t2 that are capable of outputting a differential signal to the terminator can implement differential-to-single-ended signal converter 11 that outputs a single-ended signal. For example, it is not necessary to prepare a dedicated element that outputs a single-ended signal. Instead, a component that receives an input of a differential signal and outputs the differential signal can be utilized as differential-to-single-ended signal converter 11.

FIG. 7B is a diagram illustrating one example of a configuration of single-ended-to-differential signal converter 12 according to the embodiment.

As illustrated in FIG. 7B, single-ended-to-differential signal converter 12 may include two input terminals t11 and t12 that are capable of receiving an input of a differential signal, and may receive an input of a single-ended signal by one input terminal t12 out of the two input terminals t11 and t12 being connected to a terminator. As described above, connection of the one input terminal t12 out of the two input terminals t11 and t12 that are capable of receiving an input of a differential signal to the terminator can implement single-ended-to-differential signal converter 12 that receives an input of a single-ended signal. For example, it is not necessary to prepare a dedicated element that receives an input of a single-ended signal. Instead, a component that receives an input of a differential signal and outputs the differential signal can be utilized as single-ended-to-differential signal converter 12.

For example, differential-to-single-ended signal converter 11 shown in FIG. 7A and single-ended-to-differential signal converter 12 shown in FIG. 7B are the same components. The ways the terminator is connected decide whether the component is used as differential-to-single-ended signal converter 11 or as single-ended-to-differential signal converter 12.

Note that the terminator may be provided inside first retimer 10a or second retimer 10b. For example, a terminator connected to differential-to-single-ended signal converter 11 or single-ended-to-differential signal converter 12 included in first retimer 10a may be provided inside first retimer 10a, and a terminator connected to differential-to-single-ended signal converter 11 or single-ended-to-differential signal converter 12 included in second retimer 10b may be provided inside second retimer 10b. Providing a terminator inside first retimer 10a or second retimer 10b in advance can reduce the number of components.

FIG. 8A is a diagram illustrating a different example of the configuration of differential-to-single-ended signal converter 11 according to the embodiment.

As illustrated in FIG. 8A, differential-to-single-ended signal converter 11 may include single-ended signal outputter 11a that outputs a single-ended signal and differential signal outputter 11b that outputs a differential signal, and whether single-ended signal outputter 11a or differential signal outputter 11b is used may be switchable. For example, rewriting of a register by a switching signal can switch between single-ended signal outputter 11a and differential signal outputter 11b so that either of these outputters is used. Note that the above-described switching can be performed by an external pin or the like.

The use of single-ended signal outputter 11a out of single-ended signal outputter 11a and differential signal outputter 11b can implement differential-to-single-ended signal converter 11 that outputs a single-ended signal. For example, it is not necessary to prepare a dedicated element that outputs a single-ended signal. Instead, a component that can switch between a single-ended signal and a differential signal to output either of these signals can be utilized as differential-to-single-ended signal converter 11.

FIG. 8B is a diagram illustrating a different example of the configuration of single-ended-to-differential signal converter 12 according to the embodiment.

As illustrated in FIG. 8B, single-ended-to-differential signal converter 12 includes single-ended signal input receiver 12a that receives an input of a single-ended signal and differential signal input receiver 12b that receives an input of a differential signal, and whether single-ended signal input receiver 12a or differential signal input receiver 12b is used may be switchable. For example, rewriting of a register by a switching signal can switch between single-ended signal input receiver 12a and differential signal input receiver 12b so that either of these input receivers is used. Note that the above-described switching can be performed by an external pin or the like.

The use of single-ended signal input receiver 12a out of single-ended signal input receiver 12a and differential signal input receiver 12b can implement single-ended-to-differential signal converter 12 that receives an input of a single-ended signal. For example, it is not necessary to prepare a dedicated element that outputs a single-ended signal. Instead, a component that can switch between a single-ended signal and a differential signal to output either of these signals can be utilized as single-ended-to-differential signal converter 12.

For example, differential-to-single-ended signal converter 11 and single-ended-to-differential signal converter 12 can be implemented by a component that includes single-ended signal outputter 11a and differential signal outputter 11b and single-ended signal input receiver 12a and differential signal input receiver 12b. For example, the use of single-ended signal outputter 11a and differential signal input receiver 12b by switching between single-ended signal outputter 11a and differential signal outputter 11b and between single-ended signal input receiver 12a and differential signal input receiver 12b allows the component to be utilized as differential-to-single-ended signal converter 11. Moreover, for example, the use of differential signal outputter 11b and single-ended signal input receiver 12a by switching between single-ended signal outputter 11a and differential signal outputter 11b and between single-ended signal input receiver 12a and differential signal input receiver 12b allows the component to be utilized as single-ended-to-differential signal converter 12.

FIG. 9A is a circuit diagram illustrating one example of differential-to-single-ended signal converter 11 and single-ended-to-differential signal converter 12 according to the embodiment.

Each of differential-to-single-ended signal converter 11 and single-ended-to-differential signal converter 12 includes differential amplifier 31, single-ended-to-differential signal conversion device 32, and switcher 33. Differential amplifier 31 receives an input of a differential signal, and outputs a first differential signal. Single-ended-to-differential signal conversion device 32 receives an input of one signal of the differential signal, and outputs a second differential signal. Specifically, single-ended-to-differential signal conversion device 32 receives inputs of a first input signal that is the one signal of the differential signal and a second input signal. Switcher 33 receives inputs of the first differential signal and the second differential signal, switches between the first differential signal and the second differential signal, and outputs one of these signals.

With this, both of the function of differential-to-single-ended signal converter 11 and the function of single-ended-to-differential signal converter 12 can be implemented by differential amplifier 31, single-ended-to-differential signal conversion device 32, and switcher 33. Moreover, switching of a signal to be output by switcher 33 between a first differential signal and a second differential signal allows switching between the function of differential-to-single-ended signal converter 11 and the function of single-ended-to-differential signal converter 12.

For example, switching a signal to be output by switcher 33 to a first differential signal can implement differential-to-single-ended signal converter 11. In this case, one signal of the first differential signal which is to be output from switcher 33 is used as a single-ended signal.

For example, switching a signal to be output by switcher 33 to a second differential signal can implement single-ended-to-differential signal converter 12.

Here, a circuit nearby single-ended-to-differential signal conversion device 32 will be described with reference to FIG. 9B.

FIG. 9B is a circuit diagram illustrating a circuit nearby single-ended-to-differential signal conversion device 32 according to the embodiment, and is a circuit diagram of a portion enclosed by a dashed line shown in FIG. 9A.

As illustrated in FIG. 9B, single-ended-to-differential signal conversion device 32 includes transistors Tr1 and Tr2, etc. A first input signal is input to the gate of transistor Tr1, and a first output signal for the first input signal is output from an output terminal (i.e., output terminal t22 described later in the embodiment) connected to the drain of transistor Tr1. A second input signal is input to the gate of transistor Tr2, and a second output signal for the second input signal is output from an output terminal (i.e., output terminal t23 described later in the embodiment) connected to the drain of transistor Tr2.

The output terminal of the first output signal and the input terminal of the second input signal are coupled together at capacitor C1. The output terminal of the first output signal is, as illustrated in FIG. 9A, output terminal t22 of single-ended-to-differential signal conversion device 32, and is connected to the drain of transistor Tr1 inside single-ended-to-differential signal conversion device 32. The input terminal of the second input signal is, as illustrated in FIG. 9A, input terminal t21 of single-ended-to-differential signal conversion device 32, and is connected to the gate of transistor Tr2 inside single-ended-to-differential signal conversion device 32.

As described, feeding back the first output signal to the second input signal via capacitor C1 and inputting an inverted signal as the second input signal ensures S/N.

For example, the second input signal includes a bias signal of a differential signal which has an intermediate electric potential. The bias signal is generated by bias circuit 41. Since the first output signal is fed back to the second input signal via capacitor C1, bias is required. However, since the second input signal includes a bias signal of a differential signal which has an intermediate electric potential, bias of the circuit can be ensured.

For example, the output terminal of the second output signal is connected with replica circuit 42 that is the same circuit to which the first input signal is input. The output terminal of the second output signal is, as illustrated in FIG. 9A, output terminal t23 of single-ended-to-differential signal conversion device 32, and is connected to the drain of transistor Tr2 inside single-ended-to-differential signal conversion device 32. Replica circuit 42 includes transistor Tr3, resistor R2, and current source A2 which are the same as those included in the circuit (transistor Tr1, resistor R1, and current source A1) to which the first input signal is input. Replica circuit 42 also includes capacitor C2 connected between the drain of transistor Tr2 and the gate of transistor Tr3.

With this, the output terminal of the first output signal is connected with, via capacitor C1, resistor R2, transistor Tr3, and current source A2 of replica circuit 42, and the output terminal of the second output signal is connected with, via capacitor C2, resistor R2, transistor Tr3, and current source A2 of replica circuit 42. In other words, a load supplied to the output terminal of the first output signal and a load supplied to the output terminal of the second output signal can be kept in balance. Therefore, the waveform of an output signal can be improved.

As has been described above, in cable 1, differential-to-single-ended signal converter 11 included in one of first retimer 10a or second retimer 10b converts a differential signal into a single-ended signal and outputs the single-ended signal, and single-ended-to-differential signal converter 12 included in the other of first retimer 10a or second retimer 10b converts the inputted single-ended signal into the differential signal and outputs the differential signal. Accordingly, at least a single-ended signal needs to be transmitted through coaxial line 20 that connects one differential-to-single-ended signal converter 11 and one single-ended-to-differential signal converter 12. Since connection of one differential-to-single-ended signal converter 11 and one single-ended-to-differential signal converter 12 requires one electric wire, the number of electric wires can be reduced.

### [Other Embodiments]

Hereinbefore, cable 1 according to one or more aspects of the present disclosure have been described based on the embodiment, but the present disclosure is not limited to these embodiments. The present disclosure may encompass embodiments to which various modifications that may be conceived by those skilled in the art are made and embodiments achieved by combining elements in different embodiments, as long as resultant embodiments do not depart from the spirit of the present disclosure.

For example, the above-described embodiment has presented an example in which first retimer 10a and second retimer 10b are covered by a metal shield, but first retimer 10a and second retimer 10b need not be covered by the metal shield.

For example, the above-described embodiment has presented an example in which the outer shield that covers coaxial line 20 is connected to the metal shields and the grounds of boards on which first retimer 10a and second retimer 10b are mounted, but the outer shield need not be connected to the metal shields and the grounds.

For example, the above-described embodiment has presented an example in which differential-to-single-ended signal converter 11 performs signal processing when differential-to-single-ended signal converter 11 converts a differential signal into a single-ended signal, but the signal processing need not be performed.

For example, the above-described embodiment has presented an example in which single-ended-to-differential signal converter 12 performs signal processing when single-ended-to-differential signal converter 12 converts a single-ended signal into a differential signal, but the signal processing need not be performed.

For example, the above-described embodiment has presented an example in which when single-ended-to-differential signal converter 12 included in one of first retimer 10a or second retimer 10b detects an error in an inputted single-ended signal, single-ended-to-differential signal converter 12 notifies, to differential-to-single-ended signal converter 11 included in the other of first retimer 10a or second retimer 10b to increase the amplitude of a single-ended signal to be output, but the notification need not be provided.

### [Industrial Applicability]

The present disclosure is applicable to cables including, for example, a retimer.

### [Reference Signs List]

1 cable
10 retimer
10a first retimer
10b second retimer
11 differential-to-single-ended signal converter
11a single-ended signal outputter
11b differential signal outputter
12 single-ended-to-differential signal converter
12a single-ended signal input receiver
12b differential signal input receiver
20 coaxial line
31 differential amplifier
32 single-to-differential conversion device
33 switcher
41 bias circuit
42 replica circuit
A1, A2 current source
C1, C2 capacitor
R1, R2 resistor
t1, t2, t22, t23 output terminal
t11, t12, t21 input terminal
Tr1, Tr2, Tr3 transistor

## Claims

1. A cable comprising:
a first converter;
a second converter; and
a coaxial line, wherein
each of the first converter and the second converter includes:
a differential-to-single-ended signal converter that receives an input of a differential signal and outputs a single-ended signal; and
a single-ended-to-differential signal converter that receives an input of a single-ended signal, and outputs a differential signal, and
the first converter and the second converter are connected via the coaxial line.

2. The cable according to claim 1, wherein
in each of the first converter and the second converter, whether the differential-to-single-ended signal converter or the single-ended-to-differential signal converter is used is switchable.

3. The cable according to claim 1 or 2, wherein
in each of the first converter and the second converter, a side closer to the coaxial line is DC coupled and a side opposite the side closer to the coaxial line is AC coupled.

4. The cable according to any one of claims 1 to 3, wherein
each of the first converter and the second converter is covered by a metal shield.

5. The cable according to claim 4, wherein
an outer shield that covers the coaxial line is connected to the metal shield and a ground of a board on which the first converter or the second converter is mounted.

6. The cable according to any one of claims 1 to 5, wherein
the differential-to-single-ended signal converter includes two output terminals that are capable of outputting the differential signal, and outputs the single-ended signal by one of the two output terminals being connected to a terminator.

7. The cable according to any one of claims 1 to 6, wherein
the single-ended-to-differential signal converter includes two input terminals that are capable of receiving inputs of the differential signal, and receives an input of the single-ended signal by one of the two input terminals being connected to a terminator.

8. The cable according to claim 6 or 7, wherein
the terminator is provided inside the first converter or the second converter.

9. The cable according to any one of claims 1 to 8, wherein
the differential-to-single-ended signal converter includes a single-ended signal outputter that outputs the single-ended signal and a differential signal outputter that outputs the differential signal, and whether the single-ended signal outputter or the differential signal outputter is used is switchable.

10. The cable according to any one of claims 1 to 9, wherein
the single-ended-to-differential signal converter includes a single-ended signal input receiver that receives an input of the single-ended signal and a differential signal input receiver that receives an input of the differential signal, and whether the single-ended signal input receiver or the differential signal input receiver is used is switchable.

11. The cable according to any one of claims 1 to 10, wherein
the differential-to-single-ended signal converter outputs the single-ended signal having a larger amplitude than an amplitude of the differential signal input.

12. The cable according to any one of claims 1 to 11, wherein
each of the differential-to-single-ended signal converter and the single-ended-to-differential signal converter includes:
a differential amplifier that receives an input of the differential signal, and outputs a first differential signal;
a single-ended-to-differential signal conversion device that receives an input of one signal of the differential signal, and outputs a second differential signal; and
a switcher that receives inputs of the first differential signal and the second differential signal, switches between the first differential signal and the second differential signal, and outputs one of the first differential signal or the second differential signal.

13. The cable according to claim 12, wherein
the single-ended-to-differential signal conversion device receives inputs of a first input signal that is the one signal of the differential signal and a second input signal, and an output terminal of a first output signal for the first input signal and an input terminal of the second input signal are coupled together at a capacitor.

14. The cable according to claim 13, wherein
the second input signal includes a bias signal of the differential signal which has an intermediate electric potential.

15. The cable according to claim 13 or 14, wherein
an output terminal of a second output signal for the second input signal is connected with a replica circuit that is a same circuit to which the first input signal is input.

16. The cable according to any one of claims 1 to 15, wherein
when the single-ended-to-differential signal converter included in one of the first converter or the second converter detects an error in the single-ended signal that has been input, the single-ended-to-differential signal converter notifies, to the differential-to-single-ended signal converter included in an other of the first converter or the second converter, to increase an amplitude of the single-ended signal to be output.

17. The cable according to any one of claims 1 to 16, wherein
in each of the differential-to-single-ended signal converter and the single-ended-to-differential signal converter, an encoding method of an input side and an encoding method of an output side are different.

18. The cable according to claim 17, wherein
in the differential-to-single-ended signal converter, the encoding method of the input side is a binary encoding method, and the encoding method of the output side is a multi-valued encoding method with three or more values, and
in the single-ended-to-differential signal converter, the encoding method of the input side is the multi-valued encoding method with three or more values, and the encoding method of the output side is the binary encoding method.
